# EUROPÄISCHE PATENTSCHRIFT

(11) **EP 3 500 380 B1**
(45) Veröffentlichungstag und Bekanntmachung des Hinweises auf die Patenterteilung: **11.05.2022**
(21) Anmeldenummer: 16778236.6
(22) Anmeldetag: 20.09.2016
(51) Int. Cl.: B22F 10/28, B22F 10/31, B22F 12/90, B29C 64/153, B29C 64/20, B29C 64/25, B33Y 30/00, B33Y 50/02, B22F 12/52

(54) **PULVERBETTMASCHINE SOWIE VERFAHREN ZUR ERFASSUNG DER PROZESSDATEN EINES FERTIGUNGSPROZESSES IN EINER PULVERBETTMASCHINE**
POWDER BED ADDITIVE MANUFACTURING APPARATUS AND METHOD FOR RECORDING PROCESS PARAMETERS OF THIS APPARATUS
APPAREIL DE FABRICATION ADDITIVE SUR LIT DE POUDRE ET MÉTHODE DE SAISIE DES PARAMÈTRES DU PROCÉDÉ DE CET APPAREIL

(43) Veröffentlichungstag der Anmeldung: 26.06.2019
(73) Patentinhaber: Siemens Aktiengesellschaft, 80333 München (DE)
(72) Erfinder: DÜRR, Matthias, 90473 Nürnberg (DE); SCHENK, Bernhard, 90537 Feucht (DE)
(86) Internationale Anmeldenummer: PCT/EP2016/072315
(87) Internationale Veröffentlichungsnummer: WO 2018/054454

(56) Entgegenhaltungen:
- EP-A2- 1 700 686
- DE-A1-102012 014 839
- US-A1- 2004 003 741
- US-A1- 2016 236 419

## Beschreibung

Die Erfindung betrifft eine Pulverbettmaschine mit einer Verteilvorrichtung, welche mit Prozessmaterial zu bestücken ist und welche innerhalb des Fertigungsprozesses einen Restpulvertank aufweist, welcher überschüssiges Prozessmaterial aufnimmt, sowie ein Verfahren zur Erfassung der Prozessdaten eines Fertigungsprozesses in einer Pulverbettmaschine.

Die laufende Überwachung von Pulverbettprozessen, insbesondere dem selektiven Laserschmelzen, ist heute nur schwach automatisiert. Es gibt zahlreiche Fehlermöglichkeiten, die bisher nicht erkannt und ausgeschlossen werden können. Zu den zahlreichen Fehlermöglichkeiten gehören unter Anderem, dass sich der Pulvervorrat während des Bauauftrags erschöpft. Dies kann unter Umständen zu einem unerkannten Prozessabbruch führen. Zudem kann die Verwendung eines falschen Pulvers für den vorgesehenen Bauauftrag nicht ausgeschlossen werden. Dies gilt auch für die Verwendung falscher Bauplatten. Zudem kann es zu Störungen bei der Beschichtung kommen, die durch eine nicht automatisierte Überwachung und zu spät erkannt werden.

Diese Fehlermöglichkeiten werden bisher dadurch minimiert, dass die Bauvorbereitung und -überwachung durch qualifiziertes Personal durchgeführt wird. Ergänzt wird diese Maßnahme durch Checklisten und Prozessbeschreibungen.

Demgemäß besteht die Aufgabe der vorliegenden Erfindung darin, eine Pulverbettmaschine zu schaffen, deren Fertigungsprozesse in einem automatisierten Prozess überwacht werden können, sowie ein Verfahren zur Erfassung der Prozessdaten eines Fertigungsprozesses in einer solchen Pulverbettmaschine zu benennen.

Ein Verfahren zur Erfassung der Prozessdaten eines Fertigungsprozesses in einer Pulverbettmaschine ist aus DE 10 2012 014839 A1 bekannt.

Diese Aufgabe wird erfindungsgemäß durch eine Pulverbettmaschine mit den Merkmalen des Patentanspruchs 1 sowie durch ein Verfahren mit den Merkmalen des Patentanspruchs 4 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch eine Pulverbettmaschine mit einer Verteilvorrichtung gelöst, welche mit Prozessmaterial zu bestücken ist und welche innerhalb des Fertigungsprozesses einen Restpulvertank aufweist, welcher überschüssiges Prozessmaterial aufnimmt. Die Erfindung zeichnet sich dabei dadurch aus, dass die Pulverbettmaschine auf Füßen positioniert ist, wobei in den Füßen Wägezellen angeordnet sind, wobei oberhalb der Verteilvorrichtung ein Pulvertank angeordnet ist, wobei unterhalb der Verteilvorrichtung ein Vorratszylinder angeordnet ist, wobei die Pulverbettmaschine mindestens zwei Füße mit jeweils einer Wägezelle aufweist, wobei ein Fuß mit Wägezelle unterhalb des Pulvertanks beziehungsweise des Vorratszylinders angeordnet ist und ein weiterer Fuß mit Wägezelle unterhalb des Restpulvertanks angeordnet ist, und wobei die Verwendung von Wägezellen in den Füßen der Maschine erlaubt, die absolute Befüllung der Vorratsbehälter zu erfassen, genauso wie die Verschiebung des Schwerpunktes während des Druckvorgangs.

Die Verwendung von Wägezellen in den Füßen der Maschine erlaubt, die absolute Befüllung der Vorratsbehälter zu erfassen, genauso wie die Verschiebung des Schwerpunktes während des Druckvorgangs. Insbesondere bei Metallpulvern erlaubt das Verhältnis von Materialgewicht zum Maschineneigengewicht eine gute Erfassungsmöglichkeit durch gängige Sensoren. Ferner ist die Erfassung der Gewichtsänderung durch den Einbau einer Bauplatte oder von Anbauteilen möglich. Durch die Nutzung der Gewichtswerte und den entsprechenden Engineering-Daten (Bauparameter, Auftragsdaten usw.) ist es möglich, verschiedene Informationen über den Fertigungsprozess zu erhalten.

Es ist nun möglich, zu ermitteln, ob die eingefüllte Pulvermenge für den geplanten Bauauftrag ausreicht oder ob das eingefüllte Material den für das Bauteil spezifizierten Materialien entspricht. Dies könnte beispielsweise über eine Plausibilitätsprüfung erfolgen.

Es kann zudem bestimmt werden, ob das Verhältnis aus nachgefülltem Material und vorhandenem Material, welches anhand der Restmenge im Vorratsbehälter bestimmt werden kann, zulässig ist beziehungsweise ob weitere Prozessschritte benötigt werden. Des Weiteren kann bestimmt werden, ob das Gewicht der Bauplatte dem für den Bauauftrag spezifizierten Material entspricht oder ob vorgesehene Anbauteile montiert sind.

Aus dem dynamischen Verlauf während des Bauprozesses können durch die Schwerpunktsverschiebung weitere Schlüsse gezogen werden. Es kann zum Einen bestimmt werden, ob die Schwerpunktsverschiebung mit der geplanten Schichtdicke korreliert oder ob die Schichtdicke über den Bauprozess driftet. Zum Anderen kann ermittelt werden, ob ein unerwünscht hoher Anteil des eingesetzten Pulvers statt des Bauzylinders den Restpulverbehälter erreicht.

Der Kern der Erfindung besteht darin, die Fertigungsprozesse in einer Pulverbettmaschine anwenderfreundlich zu überwachen, ohne wesentliche Änderungen an der Maschine durchzuführen zu müssen. Die erfindungsgemäße Pulverbettmaschine liefert Prozessdaten, die in einem automatisierten Prozess bereitgestellt werden und so zur Qualitätssicherung des Maschinenbetriebs einen wesentlichen Beitrag leisten.

Mit diesem Ansatz ist mit vergleichsweise geringem Aufwand eine auch nachträgliche Automatisierung des Prozessablaufs bei SLM-/EBM-Maschinen möglich.

Darüber hinaus ist oberhalb der Verteilvorrichtung ein Pulvertank angeordnet.

Ferner ist unterhalb der Verteilvorrichtung ein Vorratszylinder angeordnet.

Darüber hinaus weist die Pulverbettmaschine mindestens zwei Füße mit jeweils einer Wägezelle auf.

Außerdem ist ein Fuß mit Wägezelle unterhalb des Pulvertanks beziehungsweise des Vorratszylinders angeordnet.

Darüber hinaus ist ein weiterer Fuß mit Wägezelle unterhalb des Restpulvertanks angeordnet.

Eine darüber hinausgehende vorteilhafte Ausführung der Erfindung kann vorsehen, dass mindestens ein weiterer Fuß mit Wägezelle so unter der Pulverbettmaschine angeordnet ist, dass dieser Fuß mit Wägezelle in Bezug auf die anderen Füße mit Wägezelle außerhalb der Prozessrichtung positioniert ist. Eine spezielle Ausgestaltung der Erfindung kann darin bestehen, dass in Prozessrichtung vor dem Restpulvertank ein Bauzylinder angeordnet ist, um das hergestellte Produkt während des Fertigungsprozesses aufzunehmen.

Eine voreilhafte Ausgestaltung des erfindungsgemäßen Konzepts kann darin bestehen, dass die Wägezellen nachrüstbar sind.

Die erfindungsgemäße Aufgabe wird außerdem durch ein Verfahren zur Erfassung der Prozessdaten eines Fertigungsprozesses in einer erfindungsgemäßen Pulverbettmaschine gelöst. Das Verfahren umfasst die Schritte:
- Bestimmung der Befüllung im Vorratsbehälter mit Prozessmaterial zu Beginn des Fertigungsprozesses;
- Bestimmung der Befüllung im Restpulvertank mit Prozessmaterial am Ende des Fertigungsprozesses;
- Vergleich der ermittelten Messwerte mit bereits vorhandenen Messwerten für den speziellen Fertigungsprozess,
wobei zur Vorbereitung des Fertigungsprozesses in der Pulverbettmaschine der Schwerpunkt vor Beginn des Einrichtens der Pulverbettmaschine bestimmt wird.

Eine spezielle Ausgestaltung des erfindungsgemäßen Verfahrens kann darin bestehen, dass nach Ende des Einrichtens der Pulverbettmaschine der Schwerpunkt bestimmt wird.

Eine vorteilhafte Ausgestaltung des erfindungsgemäßen Verfahrens kann darin bestehen, dass die ermittelten Messwerte mit der zu erwartenden Schwerpunktsverschiebung bei korrekter Montage der für den Fertigungsprozess nötigen Anbauteile verglichen werden.

Eine weitere vorteilhafte Ausführung des erfindungsgemäßen Verfahrens kann vorsehen, dass aus dem dynamischen Verlauf während des Bauprozesses über die Schwerpunktsverschiebung ermittelt wird, ob diese mit der geplanten Schichtdicke des Produkts korreliert.

Eine spezielle Ausgestaltung des erfindungsgemäßen Verfahrens kann darin bestehen, dass aus dem dynamischen Verlauf während des Bauprozesses über den Anteil des eingesetzten Pulvers, der im Restpulvertank gesammelt wird, ermittelt wird, ob der Prozessablauf ordnungsgemäß ist.

Die erfindungsgemäße Pulverbettmaschine weist eine Verteilvorrichtung auf, die den Durchlauf eines Fertigungsprozesses ermöglicht. Die Verteilvorrichtung wird mit Prozessmaterial aus einem Vorratsbehälter bestückt. Der Vorratsbehälter ist als Pulvertank ausgebildet, der oberhalb der Verteilvorrichtung in der Pulverbettmaschine positioniert ist. Außerdem ist der Vorratsbehälter als Vorratszylinder ausgebildet, der unterhalb der Verteilvorrichtung angeordnet ist.

Die Pulverbettmaschine weist außerdem einen Restpulvertank auf, der überschüssiges Prozessmaterial aufnimmt und vorzugsweise in Prozessrichtung nach einem Bauzylinder angeordnet ist, in welchem das Produkt hergestellt wird. Der Bauzylinder ist vorzugsweise in Prozessrichtung nach dem Vorratsbehälter und vor dem Restpulvertank positioniert. Die erfindungsgemäße Pulverbettmaschine steht auf mindestens zwei Füßen, die jeweils mit einer Wägezelle ausgebildet sind. Der eine Fuß mit Wägezelle ist am Prozessanfang positioniert, das heißt, unterhalb der Vorratsbehälter. Der Vorratsbehälter ist vorzugsweise asymmetrisch ausgebildet, das heißt, er befindet sich im Wesentlichen oberhalb des ersten Fußes. Der eine weitere Fuß mit Wägezelle ist am Prozessende positioniert, das heißt, er ist unterhalb des Restpulvertanks angeordnet. Über die genannten Erweiterungen kann zusätzlich auch teilweise die Einrichtung der Pulverbettmaschine z. B. mit Anbauteilen erfasst und überwacht werden.

Weitere Ausführungen und Vorteile der Erfindung werden nachfolgend anhand eines Ausführungsbeispiels sowie anhand der Zeichnung erläutert.

Dabei zeigen:
Fig. 1 in einer schematischen Darstellung einen prinzipiellen Aufbau einer Pulverbettmaschine aus dem Stand der Technik;
Fig. 2 einen prinzipiellen Aufbau einer erfindungsgemäßen Pulverbettmaschine.

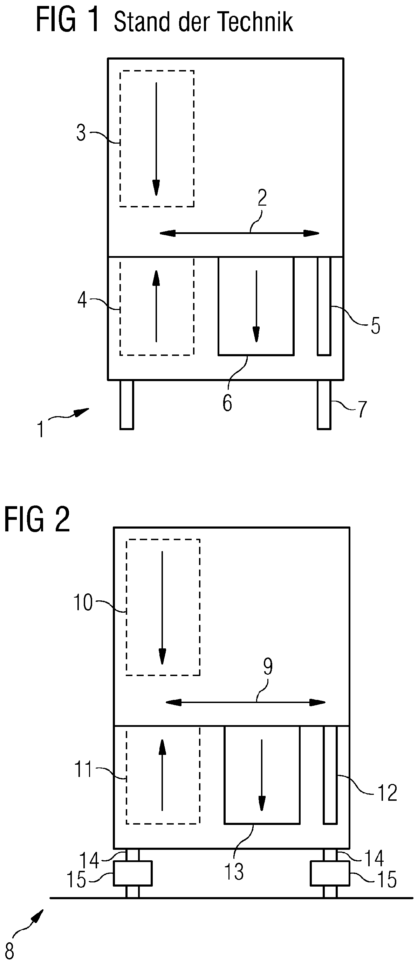

Fig. 1 zeigt den prinzipiellen Aufbau einer Pulverbettmaschine 1 mit einer Verteilvorrichtung 2, die den Durchlauf eines Fertigungsprozesses ermöglicht. Die Verteilvorrichtung 2 wird mit Prozessmaterial aus einem Vorratsbehälter bestückt. Der Vorratsbehälter kann in einer ersten Variante als Pulvertank 3 ausgebildet sein, der oberhalb der Verteilvorrichtung 2 in der Pulverbettmaschine 1 positioniert ist. In einer zweiten Variante kann der Vorratsbehälter als Vorratszylinder 4 ausgebildet sein, der unterhalb der Verteilvorrichtung 2 angeordnet ist. Die Pulverbettmaschine 1 weist außerdem einen Restpulvertank 5 auf, der überschüssiges Prozessmaterial aufnimmt und in Prozessrichtung nach einem Bauzylinder 6 angeordnet ist, in welchem das Produkt hergestellt wird. Der Bauzylinder 6 ist in Prozessrichtung nach den Vorratsbehältern und vor dem Restpulvertank 5 positioniert. Die Pulverbettmaschine 1 kann auf Füßen 7 angeordnet sein.

In Fig. 2 ist der prinzipielle Aufbau einer erfindungsgemäßen Pulverbettmaschine 8 dargestellt. Die erfindungsgemäße Pulverbettmaschine 8 weist eine Verteilvorrichtung 9 auf, die den Durchlauf eines Fertigungsprozesses ermöglicht. Die Verteilvorrichtung 9 wird mit Prozessmaterial aus einem Vorratsbehälter bestückt. Der Vorratsbehälter ist als Pulvertank 10 ausgebildet, der oberhalb der Verteilvorrichtung 9 in der Pulverbettmaschine 8 positioniert Außerdem ist der Vorratsbehälter als Vorratszylinder 11 ausgebildet, der unterhalb der Verteilvorrichtung 9 angeordnet ist. Die Pulverbettmaschine 8 weist außerdem einen Restpulvertank 12 auf, der überschüssiges Prozessmaterial aufnimmt und in Prozessrichtung nach einem Bauzylinder 13 angeordnet ist, in welchem das Produkt hergestellt wird. Der Bauzylinder 13 ist in Prozessrichtung nach dem Vorratsbehälter und vor dem Restpulvertank 12 positioniert. Die erfindungsgemäße Pulverbettmaschine 8 steht auf mindestens zwei Füßen 14, die jeweils mit einer Wägezelle 15 ausgebildet sind. Der erste Fuß 14 mit Wägezelle 15 ist am Prozessanfang positioniert, das heißt, unterhalb der Vorratsbehälter. Der Vorratsbehälter ist vorzugsweise asymmetrisch ausgebildet, das heißt, er befindet sich im Wesentlichen oberhalb des ersten Fußes 14. Der eine weitere Fuß 14 mit Wägezelle 15 ist am Prozessende positioniert, das heißt, unterhalb des Restpulvertankes 12.

Die erfindungsgemäße Pulverbettmaschine zeichnet sich dadurch aus, dass durch eine einfache und automatisierte Bestimmung des Befüllgrades der Vorratsbehälter Prozessdaten für den jeweiligen Fertigungsprozess ermittelt werden, die die Qualitätssicherung des hergestellten Produkts sicherstellen. Mit diesem Ansatz ist mit vergleichsweise geringem Aufwand eine, auch nachträgliche Automatisierung der Prozessüberwachung bei SLM-/EBM-Maschinen möglich. Über die genannten Erweiterungen kann zusätzlich auch teilweise die Einrichtung der Pulverbettmaschine z. B. mit Anbauteilen erfasst und überwacht werden.

### Bezugszeichenliste

1 Pulverbettmaschine
2 Verteilvorrichtung
3 Pulvertank
4 Vorratszylinder
5 Restpulvertank
6 Bauzylinder
7 Fuß
8 Pulverbettmaschine
9 Verteilvorrichtung
10 Pulvertank
11 Vorratszylinder
12 Restpulvertank
13 Bauzylinder
14 Fuß
15 Wägezelle

## Patentansprüche

1. Pulverbettmaschine (8) mit einer Verteilvorrichtung (9), welche mit Prozessmaterial zu bestücken ist und welche innerhalb des Fertigungsprozesses einen Restpulvertank (12) aufweist, welcher überschüssiges Prozessmaterial aufnimmt,
wobei die Pulverbettmaschine (8) auf Füßen (14) positioniert ist, wobei in den Füßen (14) Wägezellen (15) angeordnet sind,
wobei oberhalb der Verteilvorrichtung (9) ein Pulvertank (10) angeordnet ist,
wobei unterhalb der Verteilvorrichtung (9) ein Vorratszylinder (11) angeordnet ist,
**dadurch gekennzeichnet, dass** die Pulverbettmaschine (8) mindestens zwei Füße (14) mit jeweils einer Wägezelle (15) aufweist,
wobei ein Fuß (14) mit Wägezelle (15) unterhalb des Pulvertanks (10) beziehungsweise des Vorratszylinders (11) angeordnet ist und
ein weiterer Fuß (14) mit Wägezelle (15) unterhalb des Restpulvertanks (12) angeordnet ist und
wobei die Verwendung von Wägezellen in den Füßen der Maschine erlaubt, die absolute Befüllung der Vorratsbehälter zu erfassen, genauso wie die Verschiebung des Schwerpunktes während des Druckvorgangs.

2. Pulverbettmaschine (8) nach Anspruch 1,
wobei mindestens ein weiterer Fuß (14) mit Wägezelle (15) so unter der Pulverbettmaschine (8) angeordnet ist, dass dieser Fuß (14) mit Wägezelle (15) in Bezug auf die anderen Füße (14) mit Wägezelle (15) außerhalb der Prozessrichtung positioniert ist.

3. Pulverbettmaschine (8) nach einem der Ansprüche 1 bis 2, wobei die Wägezellen (15) nachrüstbar sind.

4. Verfahren zur Erfassung der Prozessdaten eines Fertigungsprozesses in einer Pulverbettmaschine (8) nach einem der Ansprüche 1 bis 3 mit den Schritten:
- Bestimmung der Befüllung im Vorratsbehälter mit Prozessmaterial zu Beginn des Fertigungsprozesses;
- Bestimmung der Befüllung im Restpulvertank (12) mit Prozessmaterial am Ende des Fertigungsprozesses;
- Vergleich der ermittelten Messwerte mit bereits vorhandenen Messwerten für den speziellen Fertigungsprozess,
wobei zur Vorbereitung des Fertigungsprozesses in der Pulverbettmaschine (8) der Schwerpunkt vor Beginn des Einrichtens der Pulverbettmaschine (8) bestimmt wird.

5. Verfahren nach Anspruch 4,
wobei nach Ende des Einrichtens der Pulverbettmaschine (8) der Schwerpunkt bestimmt wird.

6. Verfahren nach Anspruch 4 oder 5,
wobei die ermittelten Messwerte mit der zu erwartenden Schwerpunktsverschiebung bei korrekter Montage der für den Fertigungsprozess nötigen Anbauteile verglichen werden.

7. Verfahren nach Anspruch 4 oder 6,
wobei aus dem dynamischen Verlauf während des Bauprozesses über die Schwerpunktsverschiebung ermittelt wird, ob diese mit der geplanten Schichtdicke des Produkts korreliert.

8. Verfahren nach einem der Ansprüche 4 bis 7,
wobei aus dem dynamischen Verlauf während des Bauprozesses über den Anteil des eingesetzten Pulvers, der im Restpulvertank (12) gesammelt wird, ermittelt wird, ob der Prozessablauf ordnungsgemäß ist.

## Claims

1. Powder bed machine (8) having a distribution device (9) which is to be charged with process material and which has a residual powder tank (12) within the manufacturing process, which residual powder tank holds surplus process material, wherein the powder bed machine (8) is positioned on feet (14), wherein weighing cells (15) are arranged in the feet (14),
wherein a powder tank (10) is arranged above the distribution device (9),
wherein a storage cylinder (11) is arranged below the distribution device (9),
**characterized in that** the powder bed machine (8) has at least two feet (14) with in each case one weighing cell (15),
wherein a foot (14) with weighing cell (15) is arranged below the powder tank (10) or the storage cylinder (11) and
a further foot (14) with weighing cell (15) is arranged below the residual powder tank (12), and
wherein the use of weighing cells in the feet of the machine makes it possible to acquire the absolute filling of the storage containers and the displacement of the centre of gravity during the printing process.

2. Powder bed machine (8) according to Claim 1,
wherein at least one further foot (14) with weighing cell (15) is arranged under the powder bed machine (8) such that said foot (14) with weighing cell (15) is, in relation to the other feet (14) with weighing cell (15), positioned outside the process direction.

3. Powder bed machine (8) according to either of Claims 1 and 2,
wherein the weighing cells (15) are retrofittable.

4. Method for acquiring the process data of a manufacturing process in a powder bed machine (8) according to any of Claims 1 to 3, having the steps:
- determining the filling level of process material in the storage container at the start of the manufacturing process;
- determining the filling level of process material in the residual powder tank (12) at the end of the manufacturing process;
- comparing the determined measured values with existing measured values for the specific manufacturing process,
wherein, for the preparation of the manufacturing process in the powder bed machine (8), the centre of gravity is determined prior to the start of the setup of the powder bed machine (8).

5. Method according to Claim 4,
wherein, after the end of the setup of the powder bed machine (8), the centre of gravity is determined.

6. Method according to Claim 4 or 5,
wherein the determined measured values are compared with the shift of the centre of gravity that is to be expected in the case of correct installation of the attachment parts necessary for the manufacturing process.

7. Method according to Claim 4 or 6,
wherein, from the dynamic profile during the building process relating to the shift of the centre of gravity, it is determined whether this correlates with the planned layer thickness of the product.

8. Method according to any of Claims 4 to 7,
wherein, from the dynamic profile during the building process relating to that fraction of the powder used which is collected in the residual powder tank (12), it is determined whether the process flow is correct.

## Revendications

1. Machine (8) à lit de poudre comprenant un système (9) de répartition, qui est à garnir de matière de processus et qui a, au sein du processus de fabrication, un réservoir (12) de poudre résiduelle, qui reçoit de la matière de processus en excès,
dans laquelle la machine (8) à lit de poudre est placée sur des pieds (14,) des cellules (15) de pesée étant disposées dans les pieds (14),
dans laquelle un réservoir (10) de poudre est disposé au-dessus du système (9) de répartition,
dans lequel un cylindre (11) réservoir est disposé en-dessous du système (9) de répartition,
**caractérisé en ce que** la machine (8) à lit de poudre a au moins deux pieds (14) ayant chacun une cellule (15) de pesée,
dans lequel un pied (14) est, avec une cellule (15) de pesée, disposé en dessous du réservoir (10) de poudre ou respectivement du cylindre (11) réservoir,
dans lequel un autre pied (14) est, avec la cellule (15) de pesée, disposé en-dessous du réservoir (12) de poudre résiduelle et
dans lequel l'utilisation de cellules de pesée, dans les pieds de la machine permet de détecter le remplissage absolu du récipient réservoir complètement, tout comme le décalage du centre de gravité pendant l'opération d'impression.

2. Machine (8) à lit de poudre suivant la revendication 1,
dans laquelle au moins un autre pied (14) est, avec une cellule (15) de pesée, disposé en-dessous de la machine (8) à lit de poudre, de manière à ce que ce pied (14) soit avec la cellule (15) de pesée mise en position par rapport à l'autre pied (14) ayant une cellule (15) de pesée à l'extérieur de la direction du processus.

3. Machine (8) à lit de poudre suivant l'une des revendications 1 à 2,
dans laquelle les cellules (15) de pesée peuvent être mises à niveau.

4. Procédé de saisie de données d'un processus de fabrication dans une machine (8) à lit de poudre suivant l'une des revendications 1 à 3 comprenant les stades :
- détermination du remplissage du récipient réservoir en de la matière de processus au début du processus de fabrication ;
- détermination du remplissage du réservoir (12) de poudre résiduelle en matière de processus à la fin du processus de fabrication ;
- comparaison des valeurs de mesure déterminées à des valeurs de mesure déjà présentes pour le processus de fabrication particulier,
dans lequel, pour le prétraitement du processus de fabrication dans la machine (8) à lit de poudre, on détermine le centre de gravité avant le début de l'installation de la machine (8) à lit de poudre.

5. Procédé suivant la revendication 4,
dans lequel on détermine le centre de gravité à la fin de l'installation de la machine (8) à lit de poudre.

6. Procédé suivant la revendication 4 ou 5,
dans lequel on compare, pour un montage correct des parties annexes nécessaires au processus de fabrication, les valeurs de mesure déterminées au décalage du centre de gravité escompté.

7. Procédé suivant la revendication 4 ou 6,
dans lequel, à partir de la courbe dynamique, on détermine pendant le processus de construction par le décalage du centre de gravité, si celui-ci est en corrélation avec l'épaisseur de couche du produit, qui est planifiée.

8. Procédé suivant l'une des revendications 4 à 7,
dans lequel, à partir de la courbe dynamique pendant le processus de construction, on détermine par la proportion de poudre utilisée accumulée dans le réservoir (12) de poudre résiduelle, si le déroulement du processus s'effectue en bon ordre.
